(19) Europäisches Patentamt
European Patent Office
Office européen des brevets

(11) **EP 2 052 532 B1**

(12) **EUROPÄISCHE PATENTSCHRIFT**

(45) Veröffentlichungstag und Bekanntmachung des Hinweises auf die Patenterteilung:
**31.08.2016 Patentblatt 2016/35**

(51) Int Cl.:
***H04N 5/00*** *(2011.01)*

(21) Anmeldenummer: **07787103.6**

(22) Anmeldetag: **05.07.2007**

(86) Internationale Anmeldenummer:
**PCT/EP2007/056812**

(87) Internationale Veröffentlichungsnummer:
**WO 2008/012187 (31.01.2008 Gazette 2008/05)**

(54) **ANORDNUNG UND VERFAHREN ZUR DEKODIERUNG VON DIGITALEN DATEN**

ARRANGEMENT AND METHOD FOR DECODING DIGITAL DATA

DISPOSITIF ET PROCÉDÉ POUR DÉCODER DES DONNÉES NUMÉRIQUES

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **25.07.2006 DE 102006034414**

(43) Veröffentlichungstag der Anmeldung:
**29.04.2009 Patentblatt 2009/18**

(73) Patentinhaber: **Nokia Solutions and Networks GmbH & Co. KG**
**81541 Munich (DE)**

(72) Erfinder: **STADEMANN, Rainer**
**82335 Berg (DE)**

(74) Vertreter: **Weidel, Gottfried et al**
**Nokia Solutions and Networks GmbH & Co. KG**
**CEF T&I IPR Patent Administration**
**80240 Munich (DE)**

(56) Entgegenhaltungen:
**US-A1- 2002 174 483    US-A1- 2004 194 134**
**US-A1- 2007 011 343    US-A1- 2007 130 393**

**EP 2 052 532 B1**

**Beschreibung**

Anordnung und Verfahren zur Dekodierung von digitalen Daten Die Erfindung bezieht sich auf eine in dem Oberbegriff des Patentanspruchs 1 angegebene Anordnung und auf ein im Patentanspruch 7 angegebenes Verfahren zur Dekodierung von digitalen Daten.

Bei einer Übertragung von Quelldaten, wie zum Beispiel Multimediaprogrammdaten, von einem Daten-Encoder über Breitbandzugangsnetze, wie beispielsweise Digital Subsriber Line Zugangsnetze, zu einem Daten-Decoder in zum Beispiel einer Settop-Box können durch beispielsweise transiente Störungen, wie Leitungsrauschen und Störimpulse, Teile der Quelldaten verfälscht werden oder verloren gehen. Ohne zusätzliche Bitfehler erkennende oder Bitfehler korrigierende Verfahren kommt es dadurch zu Artefakten, wie zum Beispiel Ton- oder Bildstörungen.

Um Bitfehler erkennen bzw. korrigieren zu können, wird beispielsweise im Daten-Decoder eine bestimmte Anzahl von Datenbits, gleich einem Datenblock, in einem Speicher gepuffert, das heißt zwischengespeichert. Im Decoder muss dann zunächst gewartet werden, bis mindestens ein ganzer Datenblock übertragen wurde, bevor beispielsweise ein Bitfehler erkannt oder eine Bitfehlerkorrektur durchgeführt werden kann.

Dies führt zu einem langen zeitlichen Verzug, der so genannten Latenzzeit, im Decoder. Dieser Verzug macht sich beispielsweise beim Wechsel zwischen verschiedenen Programmkanälen als Wartezeit, auch Channel Change Delay bezeichnet, störend bemerkbar.

Es sind mehrere Verfahren zur Reduktion der störenden Dunkelphase in einem digitalen Fernsehdekoder bei einem Programmwechsel bekannt. So blendet die US 2005/0174483 A1 den Inhalt eines dazu speziell bereitzustellenden Kanals ein, welcher einen visuellen Überblick über die erhältlichen Kanäle gibt. Die US 2004/0194134 A1 wiederum durchsucht im Hintergrund regelmäßig alle erhältlichen Kanäle nach Bildinformationen und blendet während des Kanalwechsels die zuletzt gefundene Bildinformation des neu ausgewählten Kanals ein. Dazu wird jedoch ein redundanter Tuner benötigt.

Es ist Aufgabe der vorliegenden Erfindung eine Anordnung und ein dazugehöriges Verfahren anzugeben, dass diese Nachteile vermeidet.

Gemäß der Erfindung wird die gestellte Aufgabe durch die im Patentanspruch 1 oder 7 aufgeführten Merkmale gelöst.

Durch die erfindungsgemäßen Maßnahmen ergibt sich der Vorteil, dass eine sehr kurze Latenzzeit auftritt. Insbesondere bei einem Programmwechsel zwischen unterschiedlichen Fernsehprogrammen kann so eine störende Dunkelphase zwischen Programmwechseln verkürzt beziehungsweise vermieden werden.

Der Gegenstand der Erfindung bringt den weiteren Vorteil mit sich, dass bei einem Einsatz von Bitfehlerkorrekturverfahren große Datenblöcke verwendet werden können und somit ein großer Daten-Overhead durch viele zusätzliche Korrekturdatenblöcke vermieden wird.

Der Gegenstand der Erfindung bringt den weiteren Vorteil mit sich, dass durch ein mehrfaches Ausspielen von Datenblöcken an Anzeigeinheiten die Taktfrequenz konstant gehalten werden kann und somit die Anzeigeeinheiten einfach synchronisiert werden können.

Der Gegenstand der Erfindung bringt den weiteren Vorteil mit sich, dass der Datenfüllgrad der Dateneingangspuffereinheit mit einfachsten Schaltungsmitteln verändert werden kann.

Der Gegenstand der Erfindung bringt den weiteren Vorteil mit sich, dass Vorwärtsfehlerkorrekturverfahren verwendet werden können, die auf einfache Weise Bitfehler korrigieren können.

Weitere vorteilhafte Ausbildungen sind in den Unteransprüchen angegeben.

Weitere Besonderheiten der Erfindung werden aus den nachfolgenden Erläuterungen eines Ausführungsbeispiels anhand von Zeichnungen ersichtlich.

Es zeigen:

Fig. 1: ein Blockschaltbild einer Dekodieranordnung
Fig. 2: ein weiteres Blockschaltbild einer Dekodieranordnung.

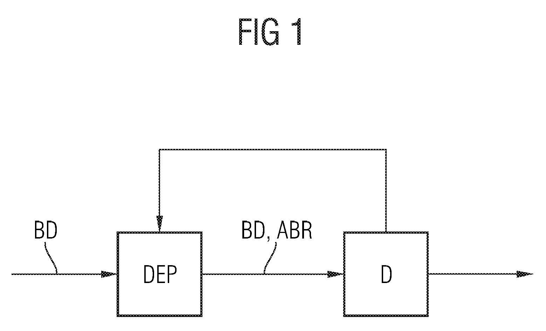

Fig. 1 zeigt ein Blockschaltbild der erfindungsgemäßen Anordnung zur Dekodierung von digitalen Daten BD, mit einer Dateneingangspuffereinheit DEP und einer Dekodiereinheit D, wobei die Dekodiereinheit D derart ausgebildet ist, dass sie die gepufferten digitalen Daten BD aus der Dateneingangspuffereinheit DEP mit einer veränderbaren Auslesebitrate ABR ausliest und dass sie zu festlegbaren Zeitpunkten t1, t2, ...tn für festlegbare Zeitabschnitte $\Delta$t1, $\Delta$t2, ...$\Delta$tn die Auslesebitrate ABR verringert. Die Dekodiereinheit D wählt die festlegbaren Zeitabschnitte $\Delta$t1, $\Delta$t2, ...$\Delta$tn insbesondere derart, dass Bitfehlerkorrekturverfahren durchführbar sind.

Um Bitfehler korrigieren zu können, wird in der Dateneingangspuffereinheit DEP eine bestimmte Anzahl von Datenbits zwischengespeichert. Dazu senkt die Dekodiereinheit D die Auslesebitrate ABR zwischen Dateneingangspuffereinheit DEP und Dekodiereinheit D für einen Zeitabschnitt $\Delta$t1, $\Delta$t2, ...$\Delta$tn ab, bis so viele Datenbits zwischengespeichert wurden, dass Bitfehler erkannt oder Bitfehler korrigiert werden können.

Als Bitfehlerkorrekturverfahren kann beispielsweise ein Vorwärtsfehlerkorrekturverfahren, das auch Forward Error Correction bezeichnet wird, angewendet werden.

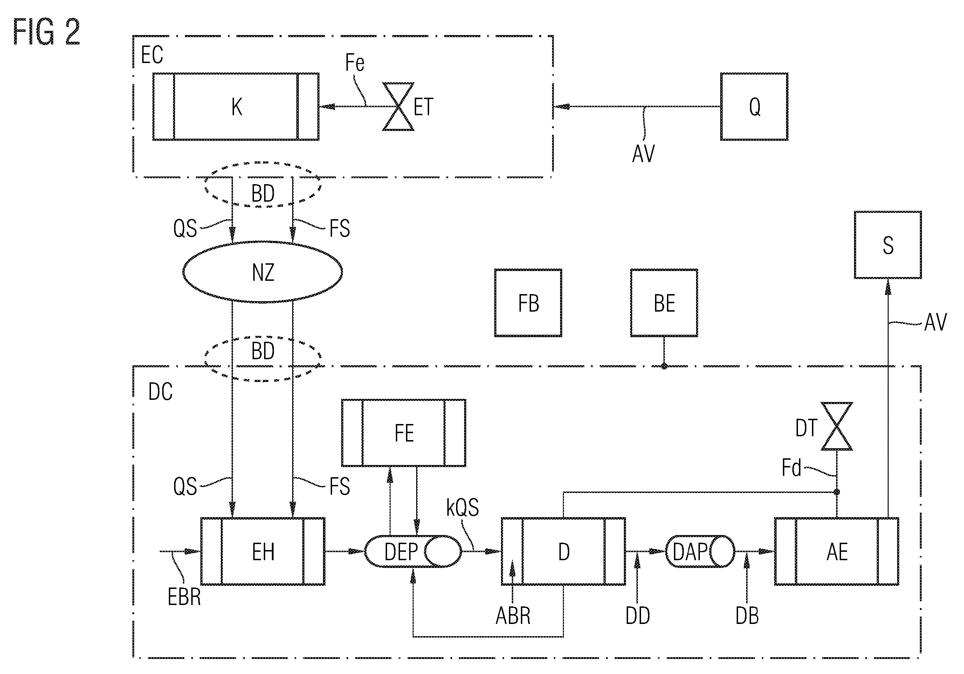

Fig. 2 zeigt ein Blockschaltbild des Erfindungsgegenstands nach Fig. 1 schematisch in einer Dekodieranordnung mit Vorwärtsfehlerkorrektur. Eine Quelle Q überträgt ein Audio- und Videosignal AV an eine Codereinheit EC. Die Codereinheit EC beinhaltet eine Kodiereinheit K und eine Codertaktversorgungseinheit ET, die die Kodiereinheit K mit der Codertaktfrequenz Fd versorgt. Die Codereinheit EC sendet digitale Daten BD, bestehend aus Quellsymbolen QS und Vorwärtsfehlerkorrektursymbolen FS über das Netz NZ an eine Decodereinheit DC. Die digitalen Daten BD liegen eingangsseitig mit einer Eingangsbitrate EBR an einer Empfangseinheit EH an. Von dort gelangen die digitalen Daten BD in eine Dateneingangspuffereinheit DEP, wo die Quelldaten QS bei Bedarf durch die Vorwärtsfehlerkorrektureinheit FE fehlerkorrigiert werden. Die so korrigierten Quellsymbole kQS liegen dann mit einer Ausgangsbitrate ABR, die beispielsweise nicht fest ist, sondern um einen Mittelwert schwanken kann, an der Dekodiereinheit D an, wo sie dekodiert werden. Die dekodierten Daten DD gelangen über eine Datenausgangspuffereinheit DAP in Datenpaketen DP in eine Anzeigeausgangseinheit AE. Dort werden diese in ein Audio- und Videosignal AV umgewandelt und einer Senke S, beispielsweise einem Fernsehgerät, zugeführt.

Eine Decodertaktversorgungseinheit DT versorgt alle Komponenten, beispielsweise die Dekodiereinheit D und die Anzeigeausgabeeinheit AE, mit einer Decodertaktfrequenz Fd.

Mit einer Fernbedienungseinheit FB und/oder Bedienungseinheit BE wird ein Wechsel zwischen unterschiedlichen Audio- und Videosignalen AV der Quelle Q veranlasst. Dieser Vorgang wird Programmwechsel bzw. Fernsehkanalwechsel bezeichnet.

Um Artefakte an der Senke S zu verhindern, werden beim Vorwärtsfehlerkorrekturverfahren in der Codereinheit EC zusätzlich zu den Quellsymbolen QS redundante Vorwärtsfehlerkorrektursymbole FS erzeugt, die mit den Quellsymbolen QS zur Decodereinheit DC übertragen werden. Für den Fall, dass bei der Übertragung von der Codereinheit EC zur Decodereinheit DC Quellsymbole QS verfälscht werden oder verloren gehen, können diese anhand der redundanten Vorwärtsfehlerkorrektursymbole FS mittels der Vorwärtsfehlerkorrektureinheit FE wieder rekonstruiert werden.

Vorwärtsfehlerkorrekturverfahren arbeiten in der Regel blockorientiert, das heißt die Vorwärtsfehlerkorrektursymbole FS werden anhand eines vorgegebenen Algorithmus aus einer bestimmten Anzahl, das heißt einem Block von Quellsymbolen QS, erzeugt. Zur Wiederherstellung von einzelnen verloren gegangen oder verfälschten Quellsymbolen QS eines Blocks in der Decodereinheit DC werden die übrigen Quellsymbole QS und die zugehörigen Vorwärtsfehlerkorrektursymbole FS benötigt. In der Decodereinheit DC muss daher mindestens so lange gewartet werden, bis ein ganzer Block von Quellsymbolen QS und die dazugehörigen Vorwärtsfehlerkorrektursymbole FS übertragen wurden, bevor ein Vorwärtsfehlerkorrekturverfahren durchgeführt werden kann. Dies führt zu einem eingangs erwähnten zeitlichen Verzug, einer Latenzzeit, in der Decodereinheit DC. Dieser Verzug macht sich insbesondere beim Wechsel zwischen verschiedenen Multimediaprogrammkanälen als Wartezeit, auch Channel Change Delay bezeichnet, störend bemerkbar.

Beim Einsatz von Vorwärtsfehlerkorrekturverfahren empfängt die Codereinheit EC ein Audio- und Videosignal AV von der Quelle Q, beispielsweise einem Fernsehprogrammserver eines Internet Service Providers. Die Kodiereinheit K in der Codereinheit EC kodiert das Audio- und Videosignal AV in digitale Daten BD mit Vorwärtsfehlerkorrektur um, bestehend aus Quellsymbolen QS und Vorwärtsfehlerkorrektursymbolen FS. Die so erzeugten digitalen Daten BD werden mit konstanter Datenrate über das Transportnetz NZ, beispielsweise ein Internetprotokoll basiertes Kernnetz und ein Digital Subscriber Line Anschlussnetz, zu der Dekodiereinheit D in der Decodereinheit DC transportiert. Die Decodereinheit DC befindet sich beispielsweise in einer Settop-Box. Die Kodiereinheit K in der Codereinheit EC arbeitet synchron mit der lokalen Codertaktversorgungseinheit ET mit der Codertaktfrequenz Fe, die Dekodierreinheit D mit der lokalen Decodertaktversorgungseinheit DT mit der Decodertaktfrequenz Fd. In der Regel wird angestrebt, dass die Decodertaktfrequenz Fd gleich der Codertaktfrequenz Fe ist, damit ein Overflow oder ein Underflow der internen Datenpuffer der Decodereinheit DC, beispielsweise Dateneingangspuffer DEP und Datenausgangspuffer DAP, vermieden wird.

An der Empfangseinheit EH der Decodereinheit DC liegen eingangsseitig mit der Eingangsbitrate EBR Quellsymbole QS und Vorwärtsfehlerkorrektursymbole FS an. Die Empfangseinheit EH schreibt diese in die interne Dateneingangspuffereinheit DEP. Wenn die Dateneingangspuffereinheit DEP mindestens einen vollständigen Vorwärtsfehler korrigierten Datenblock, bestehend aus mehreren Quellsymbolen QS und Vorwärtsfehlerkorrektursymbolen FS, enthält, können gegebenenfalls fehlende oder verfälschte Quellsymbole QS dieses Vorwärtsfehler korrigierten Datenblocks durch die mit der Dateneingangspuffereinheit DEP verbundene Vorwärtsfehlerkorrektureinheit FE ergänzt oder ersetzt werden.

Die Dekodiereinheit D entnimmt der Dateneingangspuffereinheit DEP mit einer Auslesbitrate ABR laufend korrigierte Quellsymbole kQS, dekodiert diese und schreibt die dekodierten Daten DD in eine Datenausgangspuffereinheit DAP. Eine Anzeigeausgangseinheit AE erzeugt basierend auf den dekodierten digitalen Daten DD der Datenausgangspuffereinheit DAP Audio- und Videosignale AV, die beispielsweise an ein Fernsehgerät gesendet werden.

Wenn das erste Quellsymbol QS eines Vorwärtsfehler korrigierten Datenblocks verloren geht bzw. verfälscht wird, müssen noch genügend vorher empfangene Quellsymbole QS in der Dateneingangspuffereinheit DEP vorhanden sein, damit die Dekodiereinheit D und die Anzeigeausgangseinheit AE ohne Unterbrechung weiterarbeiten können, bis das letzte Vorwärtsfehlerkorrektursymbol FS eines Vorwärtsfehler korrigierten Datenblocks empfangen wurde, und die Vorwärtsfehlerkorrektureinheit FE das fehlende bzw. verfälschte Quellsymbol QS am Beginn des Datenblocks ergänzen bzw. ändern konnte. Dies bedeutet, dass bei einer ständig aktiven Vorwärtsfehlerkorrektureinheit FE mindestens ein ganzer Vorwärtsfehler korrigierter Datenblock in der Dateneingangspuffereinheit DEP vorhanden sein muss, da die Dekodiereinheit D und die Anzeigeausgangseinheit AE im zeitlichen Mittel korrigierte digitale Quellsymbole kQS mit der gleichen Bitrate verarbeiten, wie diese empfangen werden.

Nach beispielsweise einem Programmwechsel bzw. Fernsehkanalwechsel sind zunächst die Dateneingangspuffereinheit DEP und die Datenausgangspuffereinheit DAP leer. Nach dem Stand der Technik muss nun zunächst gewartet werden, bis die Dateneingangspuffereinheit DEP nach einem Zeitabschnitt $\Delta t0$ einen Datenmindestfüllgrad $S(\Delta t0)$ nach Gleichung (1)

$$S(\Delta t0) = S(fec) + S(dec) \qquad\qquad (1)$$

erreicht hat, bevor die Dekodiereinheit D mit der Dekodierung beginnen kann. S(fec) steht dabei für die die Größe eines Vorwärtsfehler korrigierten Datenblocks und S(dec) ist die kleinste erforderliche Datenmenge in der Dateneingangspuffereinheit DEP, um systembedingte Geschwindigkeitsschwankungen des Dekodierprozesses ausgleichen zu können.

Die erfindungsgemäße Anordnung beginnt sofort nach einem Programmwechsel bzw. Fernsehkanalwechsel mit der Dekodierung, wenn die Dateneingangspuffereinheit DEP nach einem Zeitabschnitt $\Delta t1$ einen Datenfüllgrad $S(\Delta t1)$ nach Gleichung (2) erreicht hat.

$$S(\Delta t1) = S(dec) \qquad\qquad (2)$$

In der Regel ist

$$S(fec) > S(dec), \qquad\qquad (3)$$

so dass zunächst nach einem Programmwechsel bzw. Fernsehkanalwechsel keine Vorwärtsfehlerkorrektur durchgeführt wird. Um den für eine Vorwärtsfehlerkorrektur erforderlichen Datenmindestfüllgrad $S(\Delta t0)$ der Dateneingangspuffereinheit DEP nach Gleichung (1) zu erreichen, wird beim Gegenstand der Erfindung nach einem Programmwechsel bzw. Fernsehkanalwechsel die Auslesebitrate ABR der Dekodiereinheit D zunächst geringfügig unter einen Nominalwert abgesenkt. Dadurch wächst der Datenfüllgrad der Dateneingangspuffereinheit DEP, bis nach einem Zeitabschnitt ein Datenfüllgrad nach Ungleichung (4) erreicht ist. Das heißt, der Datenfüllgrad $S(t)$ sinkt nach dem Zeitabschnitt $\Delta t2$ nicht mehr unter den für die Fehlerkorrektur nötigen Füllgrad S(fec) ab.

$$S(t) >= S(fec), \text{ für } t >= \Delta t2 . \qquad\qquad (4)$$

Nach dem Zeitabschnitt $\Delta t2$ ist daher die Vorwärtsfehlerkorrektur der Vorwärtsfehlerkorrektureinheit FE voll funktionsfähig, und die Auslesebitrate ABR der Dekodiereinheit D wird wieder auf den ursprünglichen Nominalwert angehoben.

Eine Ausgestaltung, die Auslesbitrate ABR der Dekodiereinheit D unter einen Nominalwert abzusenken, besteht darin, die Decodertaktfrequenz Fd gegenüber dem Nominalwert der Codertaktfrequenz Fe für einen Zeitabschnitt $\Delta t$ zu verringern. Beispielsweise kann die Decodertaktfrequenz Fd für 50 Sekunden um 1% verringert werden, um einen Füllgrad der Dateneingangspuffereinheit zu erreichen, der einer Latenzzeit von 500 ms entspricht. Während dieser 50 Sekunden kann die Vorwärtsfehlerkorrektureinheit FE nicht oder nur eingeschränkt arbeiten. Nach dem Zeitabschnitt $\Delta t$ von 50 Sekunden ist die Vorwärtsfehlerkorrektureinheit FE wieder voll funktionsfähig.

Eine weitere erfindungsgemäßem Ausgestaltung arbeitet mit dem Nominalwert der Decodertaktfrequenz Fd. Die Dekodiereinheit D verringert aber die Auslesebitrate ABR der Dateneingangspuffereinheit DEP dadurch, dass sie die Anzeigeausgangseinheit AE veranlasst, einige Datenblöcke DB aus der Datenausgangspuffereinheit DAP wiederholt an die Senke S, beispielsweise ein angeschlossene Fernsehgerät, auszugeben. Beispielsweise kann bei einer vom Fernsehgerät benötigten Bildrahmenfrequenz von 25 Hz für einen Zeitabschnitt $\Delta t$ gleich 50 Sekunden nach einem Programmwechsels bzw. Fernsehkanalwechsels alle vier Sekunden ein Bildrahmen, der aus mehreren Datenblöcken DB gebildet wird, wiederholt ausgegeben werden. Nach 50 Sekunden hat die Dateneingangspuffereinheit DEP den entsprechend Gleichung (4) für eine funktionsfähige Vorwärtsfehlerkorrektur der Vorwärtsfehlerkorrektureinheit FE erforderlichen Datenfüllgrad $S(\Delta t2)$ erreicht. Anschließend veranlasst die Dekodiereinheit D nicht mehr die wiederholte Ausgabe einzelner Bildrahmen.

**Patentansprüche**

1. Anordnung zur Dekodierung von eingangsseitig anliegenden digitalen Daten (BD), mit einer Dateneingangspuffereinheit (DEP) und einer Dekodiereinheit (D),
   **dadurch gekennzeichnet,**
   **dass** die Dekodiereinheit (D) derart ausgebildet ist, dass sie die gepufferten digitalen Daten (BD) aus der Dateneingangspuffereinheit (DEP) mit einer veränderbaren Auslesebitrate (ABR) ausliest und dass sie zu festlegbaren Zeitpunkten (t1, t2, ...tn) für festlegbare Zeitabschnitte ($\Delta t1$, $\Delta t2$, ..$\Delta tn$) die Auslesebitrate (ABR) verringert.

2. Anordnung nach Anspruch 1,
   **dadurch gekennzeichnet,**
   **dass** die Dekodiereinheit (D) die festlegbaren Zeitabschnitte ($\Delta t1$, $\Delta t2$, ...$\Delta tn$) derart vergibt, dass Bitfehlerkorrekturverfahren durchführbar sind.

3. Anordnung nach einem der Ansprüche 1 oder 2,
   **dadurch gekennzeichnet,**
   **dass** ein Ausgang der Dekodiereinheit (D) mit einem Eingang einer Datenausgangspuffereinheit (DAP) verbunden ist,
   **dass** die Datenausgangspuffereinheit (DAP) die von der Dekodiereinheit (D) dekodierten Daten (DD) in Datenpaketen (DP) puffert,
   **dass** die Dekodiereinheit (D) die Datenausgangspuffereinheit derart steuert, dass bei Verringerung der Auslesebitrate (ABR) die Datenausgangspuffereinheit (DAP) einzelne Datenpakete (DP) wiederholt ausgibt.

4. Anordnung nach einem der Ansprüche 1 oder 2,
   **dadurch gekennzeichnet,**
   **dass** die Dekodiereinheit (D) die Auslesebitrate (ABR) durch eine von der Dekodiereinheit (D) veränderbaren Decodertaktfrequenz (Fd) einer Taktversorgungseinheit (DT) festlegt, wobei zur Verringerung der Auslesebitrate (ABR) die Decodertaktfrequenz (Fd) verringert wird.

5. Anordnung nach einem der vorhergehenden Ansprüche, **dadurch gekennzeichnet,**
   **dass** die digitalen Daten (BD) Quellsymbole (QS) und Vorwärtsfehlerkorrektursymbole (FS) beinhalten,
   **dass** die Dateneingangspuffereinheit (DEP) mit einer Vorwärtsfehlerkorrektureinheit (FE) verbunden ist,
   **dass** die Dekodiereinheit (D) die Zeitabschnitte ($\Delta t1$, $\Delta t2$, ...$\Delta tn$) so wählt, dass die Dateneingangspuffereinheit (DEP) einen derartigen Füllgrad mit Quellsymbolen (QS) und Vorwärtsfehlerkorrektursymbolen (FS) Datenblöcken (DB) erreicht, dass die Vorwärtsfehlerkorrektureinheit (FE) eine Vorwärtsfehlerkorrektur der Datenblöcke (DB) durchführen kann.

6. Anordnung nach einem der vorhergehenden Ansprüche,
   **dadurch gekennzeichnet,**
   **dass** die Dekodiereinheit (D) derart ausgebildet ist, die festlegbaren Zeitpunkte (t1, t2, ...tn) jeweils durch einen Programmwechselzeitpunkt von einer Fernbedienungseinheit (FB) und/oder von einer mit der Dekodieranordnung fest verbundenen Bedienungseinheit (BE) mitgeteilt zu bekommen.

7. Verfahren zur Dekodierung von eingangsseitig anliegenden digitalen Daten (BD), mit einer Dateneingangspuffereinheit (DEP) und einer Dekodiereinheit (D),
   **dadurch gekennzeichnet,**
   **dass** die gepufferten digitalen Daten (BD) aus der Dateneingangspuffereinheit (DEP) mit einer veränderbaren Auslesebitrate (ABR) von der Dekodiereinheit (D) ausgelesen werden und dass zu festlegbaren Zeitpunkten (t1, t2, ...tn) für festlegbare Zeitabschnitte ($\Delta t1$, $\Delta t2$, ...$\Delta tn$) die Auslesebitrate (ABR) verringert wird.

8. Verfahren nach Anspruch 7,
   **dadurch gekennzeichnet,**

**dass** die festlegbaren Zeitabschnitte (Δt1, Δt2, ...Δtn) so gewählt werden, dass Bitfehlerkorrekturverfahren durchführbar sind.

9. Verfahren nach Anspruch 7 oder 8,
**dadurch gekennzeichnet,**
**dass** in einer mit der Dekodiereinheit (D) verbundenen Datenausgangspuffereinheit (DAP) die von der Dekodiereinheit (D) dekodierten Daten (DD) in Datenpaketen (DP) gepuffert werden,
**dass** bei Verringerung der Auslesebitrate (ABR) einzelne Datenpakete (DP) wiederholt ausgegeben werden.

10. Verfahren nach Anspruch 7 oder 8,
**dadurch gekennzeichnet,**
**dass** die Auslesebitrate (ABR) durch eine veränderbare Taktfrequenz (Fd) festgelegt wird, und zur Verringerung der Auslesebitrate (ABR) die Taktfrequenz (Fd) verringert wird.

11. Verfahren nach einem der Ansprüche 7 bis 9
**dadurch gekennzeichnet,**
**dass** die digitalen Daten (BD) aus Datenblöcken (DB) aufgebaut sind, wobei die Datenblöcke (DB) Quellsymbole (QS) und Vorwärtsfehlerkorrektursymbole (FS) enthalten,
**dass** die Zeitabschnitte (Δt1, Δt2, ...Δtn) so gewählt werden, dass die Dateneingangspuffereinheit (DEP) einen derartigen Füllgrad mit Datenblöcken (DB) erreicht, dass eine Vorwärtsfehlerkorrektur der Datenblöcke (DB) durchgeführt werden kann.

## Claims

1. Arrangement for decoding digital data (BD) applied to an input, with a data input buffer unit (DEP) and a decoding unit (D),
**characterized**
**in that** the decoding unit (D) is in a form such that it reads the buffered digital data (BD) from the data input buffer unit (DEP) at an alterable read bit rate (ABR) and in that it reduces the read bit rate (ABR) at definable times (t1, t2, ... tn) for definable time periods (Δt1, Δt2, ...Δtn).

2. Arrangement according to Claim 1,
**characterized**
**in that** the decoding unit (D) assigns the definable time periods (Δt1, Δt2, ...Δtn) such that bit error correction methods are performable.

3. Arrangement according to either of Claims 1 and 2,
**characterized**
**in that** an output of the decoding unit (D) is connected to an input of a data output buffer unit (DAP),
**in that** the data output buffer unit (DAP) buffers the data (DD) decoded by the decoding unit (D) in data packets (DP),
**in that** the decoding unit (D) controls the data output buffer unit such that reduction of the read bit rate (ABR) prompts the data output buffer unit (DAP) to output individual data packets (DP) repeatedly.

4. Arrangement according to either of Claims 1 and 2,
**characterized**
**in that** the decoding unit (D) defines the read bit rate (ABR) by means of a decoder clock frequency (Fd) of a clock supply unit (DT), which decoder clock frequency is alterable by the decoding unit (D), wherein reduction of the read bit rate (ABR) involves the decoder clock frequency (Fd) being reduced.

5. Arrangement according to one of the preceding claims,
**characterized**
**in that** the digital data (BD) include source symbols (QS) and forward error correction symbols (FS),
**in that** the data input buffer unit (DEP) is connected to a forward error correction unit (FE),
**in that** the decoding unit (D) chooses the time periods (Δt1, Δt2, ...Δtn) such that the data input buffer unit (DEP) reaches a fill level with source symbols (QS) and forward error correction symbols (FS) data blocks (DB) such that the forward error correction unit (FE) can perform forward error correction for the data blocks (DB).

**6.** Arrangement according to one of the preceding claims,
**characterized**
**in that** the decoding unit (D) is designed to be notified of each of the definable times (t1, t2, ...tn) by a program change time from a remote control unit (FB) and/or from an operator control unit (BE) that is permanently connected to the decoding arrangement.

**7.** Method for decoding digital data (BD) applied to an input, with a data input buffer unit (DEP) and a decoding unit (D),
**characterized**
**in that** the buffered digital data (BD) are read from the data input buffer unit (DEP) at an alterable read bit rate (ABR) by the decoding unit (D) and in that the read bit rate (ABR) is reduced at definable times (t1, t2, ...tn) for definable time periods ($\Delta$t1, $\Delta$t2, ...$\Delta$tn).

**8.** Method according to Claim 7,
**characterized**
**in that** the definable time periods ($\Delta$t1, $\Delta$t2, ...$\Delta$tn) are chosen such that bit error correction methods are performable.

**9.** Method according to Claim 7 or 8,
**characterized**
**in that** a data output buffer unit (DAP) connected to the decoding unit (D) is used to buffer the data (DD) decoded by the decoding unit (D) in data packets (DP),
**in that** reduction of the read bit rate (ABR) prompts individual data packets (DP) to be output repeatedly.

**10.** Method according to Claim 7 or 8,
**characterized**
**in that** the read bit rate (ABR) is defined by an alterable clock frequency (Fd) and reduction of the read bit rate (ABR) involves the clock frequency (Fd) being reduced.

**11.** Method according to one of claims 7 to 9,
**characterized**
**in that** the digital data (BD) are constructed from data blocks (DB), wherein the data blocks (DB) contain source symbols (QS) and forward error correction symbols (FS),
**in that** the time periods ($\Delta$t1, $\Delta$t2, ...$\Delta$tn) are chosen such that the data input buffer unit (DEP) reaches a fill level with data blocks (DB) such that forward error correction for the data blocks (DB) can be performed.

**Revendications**

**1.** Dispositif de décodage de données numériques (BD) appliquées en entrée, comportant une unité tampon d'entrée des données (DEP) et une unité de décodage (D),
**caractérisé en ce que**
l'unité de décodage (D) est réalisée de manière telle qu'elle extrait les données numériques mises en mémoire tampon (BD) de l'unité tampon d'entrée des données (DEP) avec un débit binaire de lecture variable (ABR) et qu'elle réduit le débit binaire de lecture (ABR) à des instants déterminables (t1, t2, ..., tn) pour des périodes déterminables ($\Delta$t1, $\Delta$t2, ..., $\Delta$tn).

**2.** Dispositif selon la revendication 1, **caractérisé en ce que** l'unité de décodage (D) attribue les périodes déterminables ($\Delta$t1, $\Delta$t2, ..., $\Delta$tn) de telle sorte que des procédés de correction d'erreur binaire peuvent être exécutés.

**3.** Dispositif selon l'une des revendications 1 ou 2, **caractérisé en ce que**:

- une sortie de l'unité de décodage (D) est reliée à une entrée d'une unité tampon de sortie des données (DAP),
- l'unité tampon de sortie des données (DAP) met en mémoire tampon les données (DD) décodées par l'unité de décodage (D) dans des paquets de données (DP),
- l'unité de décodage (D) commande l'unité tampon de sortie des données de manière telle que, en cas de réduction du débit binaire de lecture (ABR), l'unité tampon de sortie des données (DAP) émet de manière répétée des paquets de données distincts (DP).

**4.** Dispositif selon l'une des revendications 1 ou 2, **caractérisé en ce que** l'unité de décodage (D) fixe le débit binaire de lecture (ABR) par une fréquence d'horloge de décodeur (Fd) pouvant être modifiée par l'unité de décodage (D), la fréquence d'horloge de décodeur (Fd) étant réduite aux fins de la réduction du débit binaire de lecture (ABR).

5. Dispositif selon l'une des revendications précédentes, **caractérisé en ce que**:

   - les données numériques (BD) contiennent des symboles sources (QS) et des symboles de correction d'erreur anticipée (FS) ;
   - l'unité tampon d'entrée des données (DEP) est reliée à une unité de correction d'erreur anticipé (FE) ;
   - l'unité de décodage (D) choisit les périodes ($\Delta$t1, $\Delta$t2, ..., $\Delta$tn) de manière telle que l'unité tampon d'entrée des données (DEP) atteint un degré de remplissage tel, avec des symboles sources (QS) et des symboles de correction d'erreur anticipée (FS) blocs de données (DB), que l'unité de correction d'erreur anticipée (FE) peut procéder à une correction d'erreur anticipée des blocs de données (DB).

6. Dispositif selon l'une des revendications précédentes, **caractérisé en ce que** l'unité de décodage (D) est réalisée de telle sorte que les instants déterminables (t1, t2, ..., tn) sont communiqués respectivement par un instant de changement de programme par une unité de télécommande (FB) et/ou par une unité de commande (BE) solidaire du dispositif de décodage.

7. Procédé de décodage de données numériques (BD) appliquées en entrée, comportant une unité tampon d'entrée des données (DEP) et une unité de décodage (D), **caractérisé en ce que**:

   - les données numériques mises en mémoire tampon (BD) sont extraites de l'unité tampon d'entrée des données (DEP) par l'unité de décodage (D) avec un débit binaire de lecture variable (ABR) et
   - le débit binaire de lecture (ABR) est réduit à des instants déterminables (t1, t2, ..., tn) pour des périodes déterminables ($\Delta$t1, $\Delta$t2, ..., $\Delta$tn).

8. Procédé selon la revendication 7, **caractérisé en ce que** les périodes déterminables ($\Delta$t1, $\Delta$t2, ..., $\Delta$tn) sont choisies de telle sorte que des procédés de correction d'erreur binaire peuvent être exécutés.

9. Procédé selon la revendication 7 ou 8, **caractérisé en ce que**:

   - les données (DD) décodées par l'unité de décodage (D) sont mises en mémoire tampon dans des paquets de données (DP) dans une unité tampon de sortie des données (DAP) reliée à l'unité de décodage (D) ;
   - des paquets de données individuels (DP) sont émis de manière répétée lorsque le débit binaire de lecture (ABR) se réduit.

10. Procédé selon la revendication 7 ou 8, **caractérisé en ce que** le débit binaire de lecture (ABR) est fixé par une fréquence d'horloge variable (Fd) et la fréquence d'horloge (Fd) est réduite aux fins de la réduction du débit binaire de lecture (ABR).

11. Procédé selon l'une des revendications 7 à 9, **caractérisé en ce que**:

   - les données numériques (BD) sont construites à partir de blocs de données (DB), les blocs de données (DB) contenant des symboles sources (QS) et des symboles de correction d'erreur anticipé (FS) ;
   - les périodes ($\Delta$t1, $\Delta$t2, ..., $\Delta$tn) sont choisies de manière telle que l'unité tampon d'entrée des données (DEP) atteint un degré de remplissage tel, avec des blocs de données (DB), qu'il est possible de procéder à une correction d'erreur anticipée des blocs de données (DB).

# FIG 1

FIG 2

EP 2 052 532 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20050174483 A1

- US 20040194134 A1